# EUROPEAN PATENT SPECIFICATION

(11) **EP 0 679 236 B1**
(45) Date of publication and mention of the grant of the patent: **03.03.1999**
(21) Application number: 94920843.3
(22) Date of filing: 29.12.1993
(51) Int. Cl.: F16K 11/02, F16K 27/00

(54) **DISTRIBUTION BEAM**
VERTEILER
BARRE DE DISTRIBUTION

(30) Priority: 14.01.1993 FI 930142; 18.02.1993 FI 930707
(43) Date of publication of application: 02.11.1995
(73) Proprietor: JAUHOLA, Lauri, SF-40630 Jyväskylä (FI); SELKOSMAA, Jari, SF-40530 Jyväskylä (FI)
(72) Inventor: JAUHOLA, Lauri, SF-40630 Jyväskylä (FI); SELKOSMAA, Jari, SF-40530 Jyväskylä (FI)
(74) Representative: Fiener, Josef
(86) International application number: FI9300561
(87) International publication number: WO9416252

(56) References cited:
- DE-C- 3 043 422
- US-A- 5 159 957

## Description

The object of the invention is a distribution beam intended for connecting devices using compressed mediums, which includes a longitudinal beam frame equipped with a distribution channel, in which frame there are several transverse through holes and set into them are attachment bolts with medium distribution channels and shut-off valves and one end of each attachment bolt includes a connection member for attaching a device to be connected to the distribution beam and together with each attachment bolt there are gaskets on both sides of the distribution channel. Such a distribution beam is generally known in the art. Here medium means most generally compressed air, but other gases or liquids may also come into question.

The distribution of compressed air to various devices normally takes place centrally by using a distribution beam in accordance with the introduction. Usually the distribution beam is manufactured from aluminium and is equipped with an inlet connection, which is simply adapted to the end of the distribution beam directly to the distribution channel. The opposite end includes either a plug or an extension connection, which connects the distribution channel to the following distribution beam. Distribution beams have been typically essentially square aluminium profiles. A series of through holes are drilled in this at the desired intervals. Into these are inserted attachment bolts, in which there is a built-in valve as well as a channel leading to the attachment end. Beneath the head of the attachment bolt and round the attachment end against the beam there are O-rings, which are pressed against the beam by means of the device being attached. Thus a tight connection is made between the distribution beam and the device being attached. The valve spindle inside the attachment bolt can be screwed through the head, when it is possible to open and close the compressed medium feed during operation.

The maintenance of industrial production lines and machines at as high a level of used capacity as possible presupposes that operation remains possible during small alteration and maintenance work. Previously, this possibility has existed only by attaching an external shut-off valve to the distribution beam, so that devices further down the line could be safely detached from the compressed medium network. In any event an arrangement of this kind leads, in the case of the distribution beam itself, to a rigid solution, nor, for reasons of cost, can it be considered for use at every outlet connection.

The intention of this invention is to create a simpler distribution beam than previously that makes flexible operation possible, which thus makes it possible to collect several different pneumatic or correspondingly hydraulic devices, outlet connections, etc. on the same distribution beam, and these can be removed and changed during the operation of a machine or production line. The characteristic features of the invention are presented in the accompanying Patent Claims. In the solution in accordance with the invention the tightness of the device to be attached to the attachment bolts and the tightness of the attachment bolt itself to the distribution beam are separated from one another, so that the removal of a device or connection from the attachment bolt does not affect the tightness of the attachment bolt. In addition, a radial gasket in relation to the distribution beam is used in the attachment bolt. Most advantageously the gaskets have the same diameter, in order to balance forces, in which case it is not necessary to connect anything to the attachment bolts during operation, as long as its internal valve is closed.

In what follows the invention is illustrated by reference to the accompanying Figures, which show some of the forms of application of the invention.

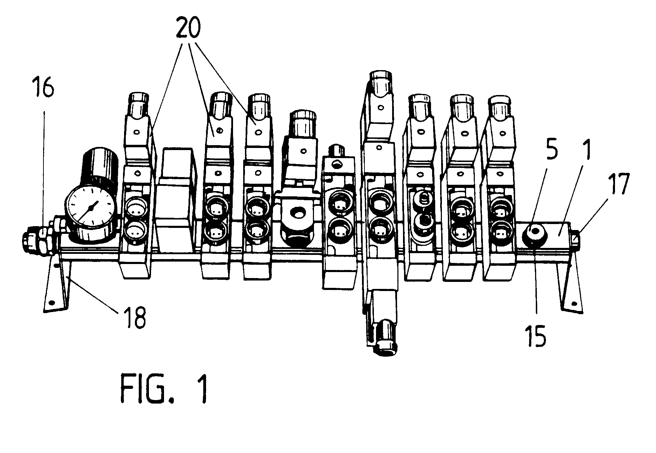

- Figure 1: shows a distribution beam in accordance with the invention and devices connected to it.
- Figure 2: shows another distribution beam in greater detail and the attachment of two devices to it.
- Figure 3: shows a cross-section of the distribution beam with an attachment bolt in partial cross-section.
- Figure 4: shows an attachment bolt used in the distribution beam.

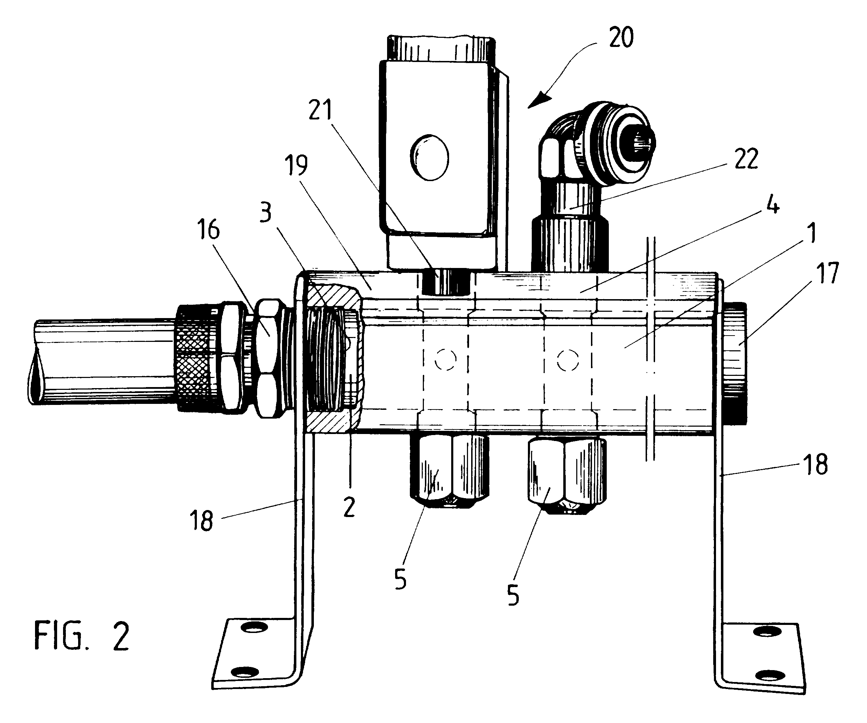

The distribution beam normally includes a beam frame 1, one end of which includes inlet connector 16, which at the same time can be attached to base component 18. Correspondingly, the other end includes plug 17, by means of which the opposite base component is attached. Several attachment bolts 5 are placed through beam frame 1, of these only the right-hand ones are free in this case and devices are attached to the others, for example magnetic valves 20. The devices are connected to the connection member 15 of the attachment bolt 5, which in this case is the threaded head of attachment bolt 5. Figure 2 shows another adaptation the distribution beam in greater detail and in partial cross-section. The inlet connection 16 is screwed into the distribution channel 2, visible at the end of beam frame 1, in which there is a corresponding thread 3. In addition to the longitudinal distribution channel 2 the beam frame 1 includes transverse through-holes 4, in which the aforementioned attachment bolts 5 are located. The other end of these includes the aforementioned connection member, which makes possible the installation of devices, such as e.g. magnetic valves 20 and connectors 22, in the distribution beam. There may be a need in magnetic valves 20 to use throttles 21 on the outlet side, in order to adjust the velocity of the cylinders. These throttles 21 are installed in the connection next to the inlet connection. However, these are located quite close to the inlet connection, in which case the width of the beam frame 1 on the connection side must not be too great, in order that it does not cover the outlet connection of the magnetic valve 20. For this reason in this distribution beam it is possible to use a narrowing 19 in the beam frame 1 and the connection end, while still keeping it the size of the longitudinal distribution channel 2 of the beam frame 1.

In the case in accordance with Figure 2, the magnetic valve 20 certainly is made tight against the beam frame 1 with the aid of the gasket constructions presented later, but on the other hand the angle connector 22 is made tight purely in the thread of bolt 5, when the pipe attached to it is able to turn the connector to its own direction of departure.

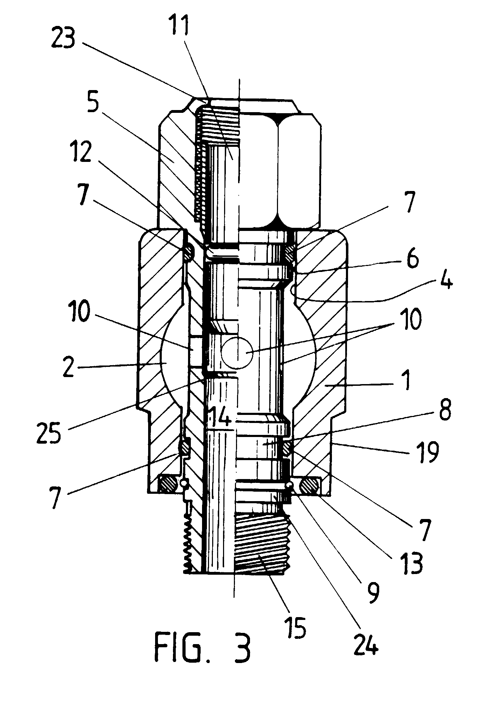

The internal construction of attachment bolt 5 is conventional. There is an internal channel 14 inside attachment bolt 5, when a valve opening is formed beneath the inlet holes 10, Figure 3. On the head side a valve spindle is used, which can be moved axially in internal channel 14 by means of a screw thread. This is made tight to the internal channel with the aid of O-ring 12. By moving the spindle 11 over the inlet holes 10 against the gasket surface 25 the feed of compressed air or other medium can be cut from attachment bolt 5 onwards. The inner edge in the upper end of head 5 has a ridge 23, which prevents the spindle 11 from being lifted entirely out of the attachment bolt. A spindle 11 that was screwed out under pressure could fly in a dangerous way towards the user.

The cross-section in Figure 3 shows clearly how the beam frame 1 has been widened in the direction of the attachment bolt 5, when cylindrical surfaces 6 are formed on either side of the distribution channel 2 in the direction of the through holes. Correspondingly, grooves 8 for O-rings 7 are machined in attachment bolt 5. The cylindrical surfaces 6 press these radially, when a radial ring tightness is created on either side of the distribution channel. This kind of ring tightness makes possible axial movement of the attachment bolt in the same way as its rotation even under pressure. In order to prevent its being pulled out, the attachment bolt is, however, equipped with a lock ring 9, which limits axial movement. At the same time it prevents the unintentional removal of the attachment bolt and the risk of accident it may cause. Usually a thread is used as connection member 15, but various kinds of instant connectors can also be considered. Figure 3 also shows the aforementioned narrowing 19 in the end at connection member 15 side, which makes it possible to locate a throttle valve 21 in the magnetic valve out-blow connection in accordance with Figure 2. In particular the out- blow from hydraulic valves must be lead to pipe, for which space is created by the narrowing.

Most devices are connected tightly to the beam frame 1 by a conventional method, i.e. using level packing on the surface of the connection member 15 side of the beam frame, this forming an O-ring 13 round attachment bolt 5. The device to be attached presses this in an axial direction against the beam frame 1.

On the other hand, especially angle connectors are preferably attached to only connection member 15, in order that the attachment bolt and the connector can be turned in the desired direction. For this purpose the neck section 24 after the pin 9 receives the connector to be attached to the connection member 15, preventing it from pushing as far as the beam frame 1.

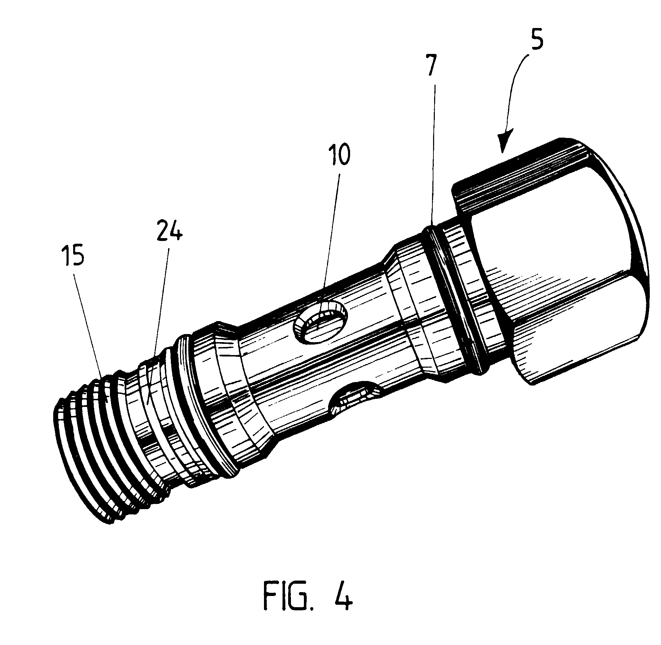

Figure 4 shows the attachment bolt complete, when it is possible to see the opening 10 leading to the internal channel, the thread used as a connection member 15, the O-rings 7, and the neck section 24.

It is obvious to one versed in the art that the distribution beam can be realized in many ways while remaining, however, within the framework of the accompanying Patent Claims. In particular, the radial ring gasket can be realized by locating the O-ring either on the beam frame or the attachment bolt. At the same time, the widening of the beam frame in an axial direction can vary considerably.

## Claims

1. A distribution beam intended for connecting devices using compressed mediums, which includes a longitudinal beam frame (1) equipped with a distribution channel (2), in which frame there are several transverse through holes (4) and set into them are attachment bolts (5) with medium distribution channels (14) and shut-off valves and one end of each attachment bolt (5) includes a connection member (15) for attaching a device (20, 22) to be connected to the distribution beam and together with each attachment bolt (5) there are gaskets on both sides of the distribution channel (2), characterized in that the beam frame (1) is widened in the direction of the attachment bolt (5) to create a gasket space for the length of the through hole (4), and that a radial ring gasket (6, 7, 8) is formed on both sides of the distribution channel (2) between the bolt (5) and the beam frame (1).

2. A distribution beam in accordance with Patent Claim 1, characterized in that the ring gasket (6, 7, 8) between the bolt (5) and the beam frame (1) consists of an O-ring (7) in a groove (8) and in the opposite component is a cylindrical surface (6) that compresses the O-ring (7) radially.

3. A distribution beam in accordance with Patent Claim 2, characterized in that at least one O-ring (7) is located in the attachment bolt (5) and the gasket construction cylindrical surface (6) is formed in the beam frame (1).

4. A distribution beam in accordance with either Patent Claim 1 or 2, characterized in that the end of the bolt (5) on the connection member (15) side includes a locking member, e.g. a lock ring (9), which prevents an unused bolt (5) from detaching from the beam frame (1).

5. A distribution beam in accordance with Patent Claim 4 characterized in that the bolt (5) and its connection member (15) are adapted to leave a tolerance between the connected device (20, 22) and the beam frame (1), such that the bolt (5) and the connected device (20, 22) attached to it can be rotated freely.

6. A distribution beam in accordance with one of Patent Claims 1 - 5, characterized in that the profile of the beam frame (1) includes a narrowing (19) on the connection member (15) side, such that its width near the connection member (15) is smaller than that at the distribution channel (2).

7. A distribution beam in accordance with one of Patent Claims 1 - 6, characterized in that the shut-off valve of the bolt (5) consists of a valve opening machined in its internal channel (14) and a valve spindle (11) moved axially by means of a thread, and that the edge (23) of the head of the bolt (5) on the spindle side is folded inwards to prevent the spindle (11) from being pulled out accidentally.

## Patentansprüche

1. Verteiler zum Anschließen an mit Druckmedium arbeitenden Vorrichtungen mit einem langgestreckten, einen Hauptkanal (2) aufweisenden Rumpfteil (1) mit mehreren durchgehenden Querbohrungen (4) und in diese eingesetzten Abzweighohlzapfen (5) mit Abzweigkanal (14) und Absperrventilen , wobei am Ende des einzelnen Abzweighohlzapfens (5) ein Verbindungselement (15) zum Anfügen der anzuschließenden Vorrichtung (20, 22) an den Verteiler vorhanden ist und zu jedem der Hohlzapfen (5) beiderseits des Hauptkanals (2) Dichtungen gehören, dadurch gekennzeichnet, dass das Rumpfteil (1), um Dichtungsraum über die Länge der durchgehenden Bohrung (4) zu schaffen, in Richtung des Abzweighohlzapfens (5) verbreitert ist, und dass beiderseits des Hauptkanals (2) zwischen Abzweighohlzapfen (5) und Rumpfteil (1) eine radiale Ringdichtung (6, 7, 8) ausgebildet ist.

2. Verteiler nach Anspruch 1, dadurch gekennzeichnet, dass die Ringdichtung (6, 7, 8) zwischen Abzweighohlzapfen (5) und Rumpfteil (1) einen O-Ring (7) in einer Rille (8) und an der Gegenkomponente eine gegen den O-Ring (7) radial drückende Zylinderfläche (6) umfasst.

3. Verteiler nach Anspruch 2, dadurch gekennzeichnet, dass wenigstens ein O-Ring (7) an den Abzweighohlzapfen (5) montiert und die Zylinderfläche (6) der Dichtungskonstruktion am Rumpfteil (1) ausgebildet ist.

4. Verteiler nach Anspruch 1 oder 2, dadurch gekennzeichnet, dass am verbindungselementseitigen (15) Ende des Abzweighohlzapfens (5) ein Sicherungselement, zum Beispiel ein Sicherungsring (9), vorhanden ist, der verhindert, dass sich der unbenutzte Hohlzapfen (5) vom Rumpfteil (1) löst.

5. Verteiler nach Anspruch 4, dadurch gekennzeichnet, dass der Hohlzapfen (5) mit seinem Verbindungselement (15) so konzipiert ist, dass zwischen der angeschlossenen Vorrichtung (20, 22) und dem Rumpfteil (1) Spiel bleibt, so dass der Zapfen (5) einschliesslich des darangefügten Verbindungsteils (20, 22) frei drehbar ist.

6. Verteiler nach irgendeinem der Ansprüche 1 bis 5, dadurch gekennzeichnet, dass das Profil des Rumpfteils (1) auf der dem Verbindungselement (15) zugewandten Seite einen Einzug (19) aufweist, wobei seine Breite dann in der Nähe des Verbindungselements (15) kleiner ist als am Hauptkanal (2).

7. Verteiler nach irgendeinem der Ansprüche 1 bis 6, dadurch gekennzeichnet, dass das Absperrventil des Hohlzapfens (5) eine in den Abzweigkanal (14) eingearbeitete Ventilöffnung und eine über Gewinde axial verstellbare Spindel (11) umfasst, und dass der der Spindel (11) zugewandte Rand (23) des Hohlzapfen-(5)-Kopfes zwecks Verhinderns eines unbeabsichtigten Herausziehens der Spindel (11) nach innen hin gestaucht ist.

## Revendications

1. Collecteur destiné au raccordement d'appareils utilisant un fluide sous pression, comprenant une barre creuse longitudinale (1) munie d'un canal de distribution (2), sur laquelle se trouvent transversalement plusieurs perforations (4) portant des goujons de raccord (5) avec canal intérieur (14) et valves de fermeture, une des extrémités des goujons de raccord (5) comportant un élément de raccord (15) pour le raccordement d'appareils (20, 22) au collecteur, chaque goujon de raccord (5) étant pourvu de joints de part et d'autre du canal de distribution (2), caractérisé par le fait que la barre (1) du collecteur est élargie dans le sens du goujon de raccord (5) pour former un espace étanche sur toute la longueur de la perforation (4) et qu'il y a des deux côtés du canal de distribution (2) un joint annulaire radial (6, 7, 8) entre le goujon (5) et la barre (1).

2. Collecteur selon la revendication 1 caractérisé par le fait que le joint annulaire (6, 7, 8) entre le goujon (5) et la barre (1) consiste en un anneau en forme de O (7) dans une cannelure (8) et que l'élément opposé est une surface cylindrique (6) qui comprime l'anneau en O (7) radialement.

3. Collecteur selon la revendication 2 caractérisé par le fait qu'au moins un anneau en O (7) est fixé sur le goujon de raccord (5) et que la surface cylindrique (6) de la structure faisant joint est usinée dans la barre (1) du collecteur.

4. Collecteur selon la revendication 1 ou 2 caractérisé par le fait que l'extrémité du goujon (5) du côté de l'élément de raccord (15) comprend un élément de blocage, autrement dit une bague de blocage (9) qui empêche un goujon (5) non utilisé de se détacher de la barre (1).

5. Collecteur selon la revendication 4 caractérisé par le fait que le goujon (5) et son élément de raccord (15) sont disposés de sorte à laisser un jeu entre l'appareil raccordé (20, 22) et la barre (1), de telle sorte que le goujon (5) et l'appareil (20, 22) qui y est relié peuvent pivoter librement.

6. Collecteur selon une des revendications 1 à 5 caractérisé par le fait que le profil de la barre (1) comporte un rétrécissement (19) sur le côté de l'élément de raccord (15), de sorte que sa largeur à proximité de l'élément de raccord (15) est moins grande que celle se trouvant au niveau du canal de distribution (2).

7. Collecteur selon une des revendications 1 à 6 caractérisé par le fait que la valve de fermeture du goujon (5) consiste en une ouverture pratiquée dans le canal intérieur (14) et une tige de soupape (11) se déplaçant axialement au moyen d'un filetage, et que le bord (23) du goujon de raccord se trouvant du côté de la base de la tige de soupape est recourbé vers l'intérieur pour empêcher l'extraction accidentelle de ladite tige (11).
